# EUROPEAN PATENT APPLICATION

(11) **EP 2 711 159 A1**
(43) Date of publication of application: **26.03.2014**
(21) Application number: 12786685.3
(22) Date of filing: 28.03.2012
(51) Int. Cl.: B29C 49/42, B29C 49/04

(54) **GUIDE DEVICE FOR PARISON**

(30) Priority: 19.05.2011 JP 2011112147
(71) Applicant: Yachiyo Industry Co., Ltd., Sayama-shi Saitama 350-1335 (JP); The Japan Steel Works, Ltd., Tokyo 141-0032 (JP)
(72) Inventor: ARAYA Satoru, Sakura-shi Tochigi 329-1334 (JP); YAMASHITA Shinsuke, Sakura-shi Tochigi 329-1334 (JP); HAYASHI Hiroaki, Sakura-shi Tochigi 329-1334 (JP); HISATOMI Yuji, Yokohama-shi Kanagawa 236-0004 (JP); SAITO Naoto, Yokohama-shi Kanagawa 236-0004 (JP); MURATA Naoyuki, Yokohama-shi Kanagawa 236-0004 (JP); KAWACHI Ryuichi, Yokohama-shi Kanagawa 236-0004 (JP); ITO Yuji, Yokohama-shi Kanagawa 236-0004 (JP)
(74) Representative: Piésold, Alexander James
(86) International application number: PCT/JP2012/058094
(87) International publication number: WO 2012/157341

(57) **Abstract**

A guide device 3 for smoothing into a shape of a flat plate a parison P having a semi-circular shape in a planar cross-section, the parison being extruded from an extrusion device 1 and divided into two by a cutter 2, wherein the guide device includes a spiral guide element 4 that is in contact with the parison P while rotating about an axis, the spiral guide element being formed so as to rotate in opposite directions with each other on the left and right of a middle part 4C as a boundary so as to expand the parison P to the left and right. The spiral guide element 4 is formed in a protruding shape on an outer periphery of a shaft 5 rotated by the driving of a drive motor M.

## Description

### {Technical Field}

The present invention relates to a guide device for parison.

### {Background Art}

Devices used for a blow molding or the like, for smoothing into a shape of a flat plate a parison having a semi-circular shape in a planar cross-section and being suspended from an extrusion device, are described as conventional examples in Patent Documents 1 and 2. Technologies for smoothing the parison into the shape of a flat plate by being in contact with a peripheral surface of a cylindrical guide member are described in the above Documents.

### {Citation List}

### {Patent Literature}

{Patent Document 1}
   Japanese Patent Publication No. H04-002087
{Patent Document 2}
   Japanese Patent No. 4295213

### {Summary of Invention}

### {Technical Problem}

According to the technologies described in Patent Documents 1 and 2, there is a problem that the parison easily returns to a curved surface shape again by its own elastic restoring force after the parison passes through the guide member because its original shape is a semi-circular shape in a planar cross-section, even if the parison is temporarily smoothed into a shape of a flat plate by being in contact with the peripheral surface of the guide member.

In addition, there is a problem that the parison tends to partially adhere to the peripheral surface of the guide member because the parison immediately after extruded from the extrusion device is still in a highly liquid molten state. To solve this problem, it is considered a method of suppressing the adhesion of the parison by cooling down the peripheral surface of the guide member by cooling water flowing in a pipe material constituting the guide member. However, this method tends to be expensive in production cost of the guide device, because this method requires a cooling water pipe, a pump, and the like, and increases the number of members and assembly man-hours.

The present invention has been devised to solve the above problems, and an objective of the present invention is to provide a guide device for parison which has an excellent smoothing capability when smoothing into a shape of a flat plate a parison having a semi-circular shape in a planar cross-section while the guide device suppresses the adhesion of the parison.

### {Solution to Problem}

To solve the above problems, an aspect of a guide device for parison according to the present invention smoothes into a shape of a flat plate a parison having a semi-circular shape in a planar cross-section and being suspended from an extrusion device, wherein the guide device includes a spiral guide element that is in contact with the parison while rotating about an axis, the spiral guide element being formed to rotate in opposite directions with each other on the left and right of a middle part as a boundary so as to expand the parison to the left and right.

### {Advantageous Effects of Invention}

According to the present invention, the parison is sent downwardly while spreading outwardly in a width direction of the parison from the center in the width direction of the parison as a boundary by a force of a translational component in an axial direction caused by a rotation of the spiral guide element. Therefore, an elastic restoring force of the parison to return to an original curved shape is reduced by the applied force of the translational component and the parison is easily smoothed into the shape of a flat plate. In addition, since a contact portion with the parison is the spiral guide element formed at intervals in the axial direction, an area of contact is reduced and the adhesion of the parison to the guide device is reduced correspondingly.

Furthermore, according to the present invention, the spiral guide element is formed in a protruding shape on the outer periphery of a shaft.

According to the present invention, a rigidity of the spiral guide element is enhanced by the shaft.

### {Advantageous Effects of Invention}

According to the present invention, the guide device for parison has an excellent smoothing capability when smoothing into a shape of a flat plate a parison having a semi-circular shape in a planar cross-section, while suppressing the adhesion of the parison.

### {Brief Description of Drawings}

FIG. 1 is a side view of a guide device for parison according to the present invention.
FIG. 2 is a plan view of the guide device for parison according to the present invention.
FIG. 3 is a side view of a spiral guide element according to the present invention.
FIG. 4 is a side cross-sectional view of the spiral guide element according to the present invention.
FIG. 5 is a side cross-sectional view showing a modification example of the spiral guide element according to the present invention.
FIG. 6 is a side view showing another modification example of the spiral guide element according to the present invention.

### {Description of Embodiments}

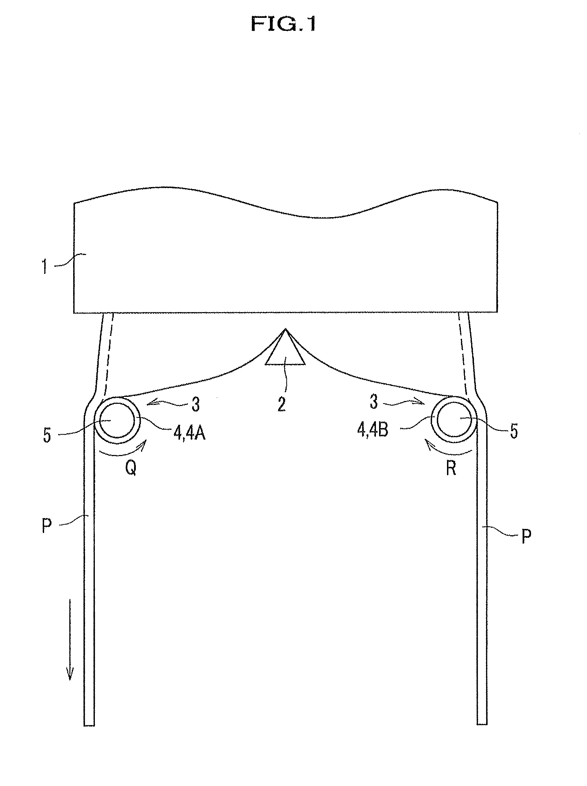

As shown in FIG. 1, a parison P is extruded from a lower end of an extrusion device 1. The extrusion device 1 is an extrusion device of a generic structure, for example, for extruding a molten resin as the parison P from an annular resin passage which is formed between a central mandrel and an outer die. A cutter 2 is provided below the extrusion device 1, and the parison P extruded in a cylindrical shape is divided by the cutter 2 into a pair of sections having a semi-circular shape in a planar cross-section respectively. In another embodiment, the parison P can be extruded from the extrusion device 1 already in a pair of sections having a semi-circular shape in a planar cross-section respectively.

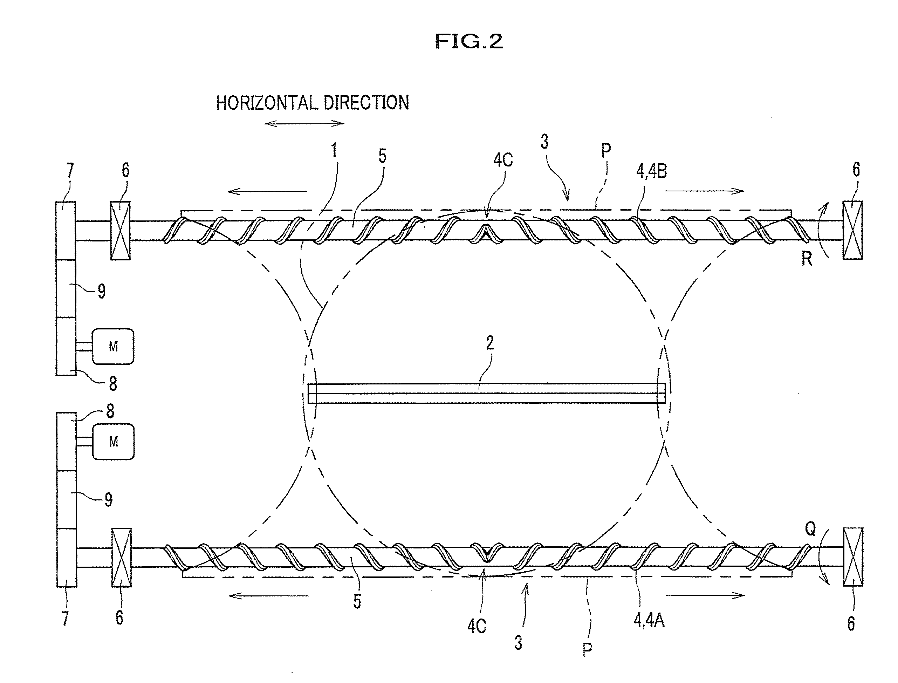

Each extruded parison P having the semi-circular shape in a planar cross-section is smoothed into a shape of a flat plate by a guide device 3. With reference to FIG. 2 (the extrusion device 1 and the parison P are shown by imaginary lines), the guide device 3 includes a spiral guide element 4 that is in contact with the parison P while rotating about an axis, the spiral guide element 4 being formed so as to rotate in opposite directions with each other on the left and right of a middle part 4C as a boundary so as to expand the parison P to the left and right, i.e., outwardly in a width direction of the parison P. A material of the spiral guide element 4 is a metal material, a synthetic resin material, a rubber material, or the like, and not limited to these.

When two spiral guide elements 4 in contact with each of the parisons P are distinguished as codes 4A and 4B, the spiral guide elements 4A, 4B are laid out so that each of the axes is along a horizontal direction and in parallel with each other. The spiral guide elements 4A, 4B are in contact with an inner surface side (an inner peripheral surface side when the parison has been in a state of a cylinder) of each of the parisons P, and when viewed from an axial direction of the spiral guide elements 4A, 4B as shown in FIG. 1, one spiral guide element 4A rotates in a counterclockwise direction Q to send the parison P downwardly, and the other spiral guide element 4B rotates in a clockwise direction R to send the parison P downwardly.

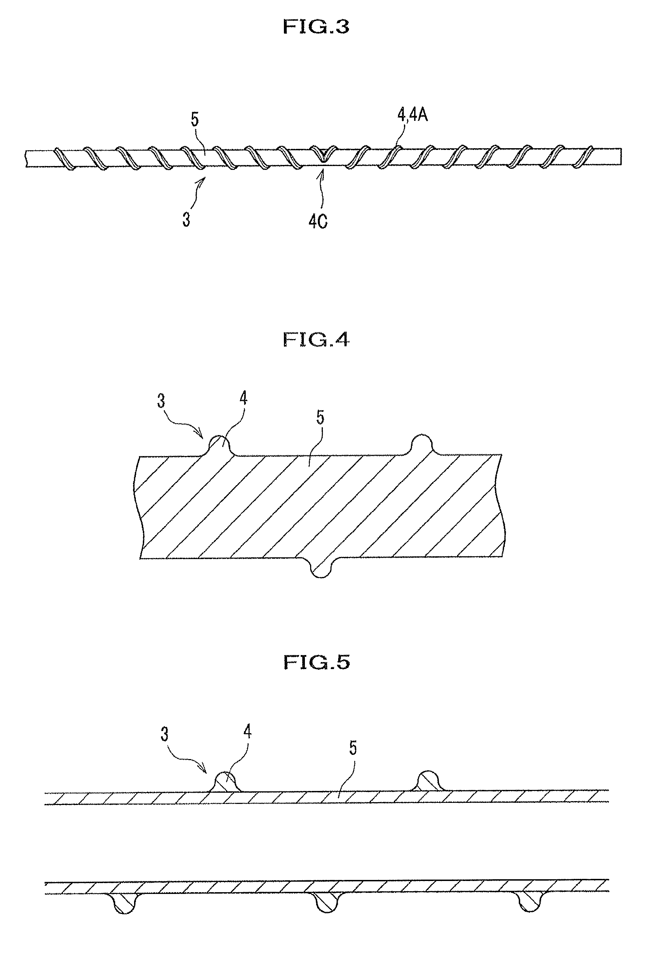

As shown in FIG. 2, FIG. 3, the spiral guide element 4 is, for example, formed in a protruding shape on an outer periphery of a shaft 5. As shown in FIG. 4, a cross-sectional view of the spiral guide element 4 has chevron shapes, and a top portion thereof is formed in a curved shape. In FIG. 4, an aspect is shown that the spiral guide element 4 is formed integrally with the shaft 5, however, the spiral guide element 4 can be formed separately from the shaft 5 to be assembled integrally with the shaft 5 in another aspect.

As shown in FIG. 2, the shaft 5 has a length greater than or equal to a width dimension of the parison P in the shape of a flat plate, and is a cylindrical member extending along a horizontal direction, each periphery of both ends of the shaft 5 being supported by a bearing 6 mounted on a frame not shown. A transmission belt 9 encircles a driven pulley 7 which is axially mounted on one end of the shaft 5 and a driving pulley 8 which is axially mounted on an output shaft of a drive motor M.

The spiral guide element 4A is spirally formed on the shaft 5 so as to have a translational component to translate the parison P toward the right side in a region of the right side of the middle part 4C in FIG. 2, and so as to have a translational component to translate the parison P toward the left side in a region of the left side of the middle part 4C, according to a rotation in the direction Q. The spiral guide element 4B is the same as the spiral guide element 4A, and spirally formed on the shaft 5 to have a translational component to translate the parison P toward the right side in a region of the right side of the middle part 4C in FIG. 2, and to have a translational component to translate the parison P toward the left side in a region of the left side of the middle part 4C, according to a rotation in the direction R.

As described above, each of the parisons P is sent downwardly while spreading outwardly in the width direction of the parison P from the center in the width direction of the parison P as a boundary by a force of the translational component applied from the top portion of the spiral guide elements 4A, 4B, when each of the shafts 5 is rotated by the driving of each of the drive motors M. Therefore, an elastic restoring force of the parison P to return to an original curved shape is reduced by the applied force of the translational component, and the parison P is easily smoothed into the shape of a flat plate.

There is a problem that the parison P tends to partially adhere to a contact portion therewith, because the parison P immediately after extruded from the extrusion device 1 is still in a highly liquid molten state. By using the guide device 3 according to the present invention to solve the problem, an area of the contact portion is reduced significantly because the contact portion with the parison P is around the top portion formed at intervals in the axial direction of the spiral guide element 4, and the adhesion of the parison P to the contact portion is reduced correspondingly. Therefore, measures such as using cooling water to prevent the adhesion of the parison P can be omitted.

A rotational speed of the spiral guide element 4 can be configured to be variable, for example, by changing a rotational speed of the drive motor M. According to a test result of the present invention, if the rotational speed (strictly a speed of a point of contact with the parison P (an angular speed multiplied by a radius of the spiral guide element 4)) of the spiral guide element 4 is slower than an extrusion speed of the parison P from the extrusion device 1, the parison P tends to cause wavy wrinkles. On the other hand, if the rotational speed of the spiral guide element 4 is faster than the extrusion speed of the parison P, the parison P tends to be pulled vertically to generate a thin portion. It has been confirmed that the parison P is guided smoothly without such problems if the rotational speed of the spiral guide element 4 is set to substantially the same with the extrusion speed of the parison P.

As a modification example of the present invention, FIG. 5 shows an example, wherein the shaft 5 is configured with a hollow pipe member, and the spiral guide element 4 separate from the shaft 5 is wound on an outer peripheral surface of the shaft 5. Cooling water may be supplied to the interior of the shaft 5 in order to further reduce the adhesion of the parison P.

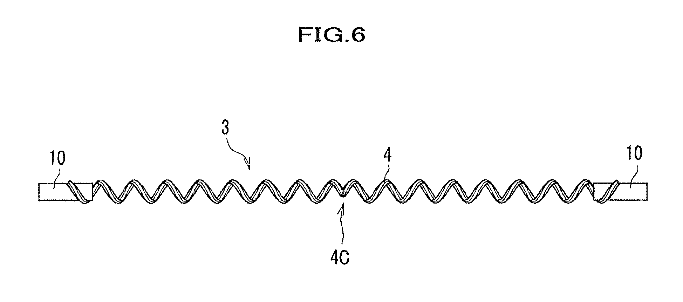

As another modification example of the present invention, FIG. 6 shows the spiral guide element 4 having a hollow structure inside thereof. In this case, both ends of the spiral guide element 4 are, for example, attached to rotatable shaft members 10 respectively. The modification example is suitable for a case that the rigidity is ensured by the spiral guide element 4 by itself, and the shaft 5 shown in FIGS. 1 to 5 can be omitted.

Preferred embodiments of the present invention have been described above, however, the present invention is not limited to the embodiments described in the drawings, and various design changes are possible within a scope not departing from a spirit of the present invention.

### {Reference Signs List}

- 1:: extrusion device
- 2:: cutter
- 3:: guide device
- 4 (4A, 4B):: spiral guide element
- 4C:: middle part
- 5:: shaft
- P:: parison

## Claims

1. A guide device for parison that smoothes into a shape of a flat plate a parison having a semi-circular shape in a planar cross-section, the parison being suspended from an extrusion device, comprising
a spiral guide element that is in contact with the parison while rotating about an axis, the spiral guide element being formed to rotate in opposite directions with each other on the left and right of a middle part as a boundary so as to expand the parison to the left and right.

2. The guide device for parison as set forth in claim 1, wherein the spiral guide element is formed in a protruding shape on an outer periphery of a shaft.
